# EUROPÄISCHE PATENTSCHRIFT

(11) **EP 2 428 434 B1**
(45) Veröffentlichungstag und Bekanntmachung des Hinweises auf die Patenterteilung: **26.08.2015**
(21) Anmeldenummer: 11179674.4
(22) Anmeldetag: 01.09.2011
(51) Int. Cl.: B62D 33/02, B62D 33/037

(54) **Schließanordnung für einen Fahrzeugbau**
Locking mechanism for a vehicle superstructure
Mécanisme de fermeture pour une structure de véhicule

(30) Priorität: 14.09.2010 DE 102010037515
(43) Veröffentlichungstag der Anmeldung: 14.03.2012
(73) Patentinhaber: F. HESTERBERG & SÖHNE GmbH & Co. KG, 58256 Ennepetal (DE)
(72) Erfinder: Tiedtke, Henning, 58256 Ennepetal (DE); Feinbier, Joachim, 58256 Ennepetal (DE)
(74) Vertreter: Bungartz Christophersen Partnerschaft mbB Patentanwälte

(56) Entgegenhaltungen:
- EP-A1- 1 457 409
- EP-A1- 2 039 594
- EP-A2- 0 335 427
- EP-A2- 1 743 791
- EP-A2- 1 955 932
- ES-A1- 2 143 933

## Beschreibung

Die Erfindung betrifft eine Schließanordnung für einen einen Ladeboden und einen durch vertikale Rungen getragenen Dachrahmen aufweisenden Fahrzeugaufbau, wobei die Rungen, im Bereich des Dachrahmens gehalten, nach fahrzeugaußen ausschwenkbar gestaltet sind, und durch Einschwenken ihr unteres Ende gegen eine in Höhe des Ladebodens angeordneten Rungenhalter gelangt und an diesem verriegelbar ist, wobei eine an der Rückseite der Runge angeordnete Strebe mit ihrem unteren Ende gelenkig an dem Ladeboden oder dem Rungenhalter, und mit ihrem oberen Ende gelenkig an der Runge an einem Ort oberhalb deren unteren Endes abgestützt ist.

Eine Schließanordnung mit diesen Merkmalen ist aus der EP 1 955 932 A2 und EP 1743791 bekannt. Eine schwenkbeweglich an der Innenseite der Runge angeordnete Strebe ist bei dieser Schließanordnung als Platte gestaltet, deren Breite die Breite der Runge übersteigt. Auf diese Weise deckt die Strebe sowohl die Runge als auch die vertikalen Ränder der jeweils angrenzenden Bordwände an deren Rückseite flächig ab. Das Eindringen von Staub und Feuchtigkeit in den Laderaum des Fahrzeugs wird reduziert, da im Bereich der Runge Staub und Feuchtigkeit weit weniger als üblich hindurchtreten und so in das Fahrzeuginnere gelangen können.

Es hat sich herausgestellt, dass die Strebe, da sie bei geschlossener Runge die Gewichtslast des Fahrzeugaufbaus zumindest mitträgt, gestaucht wird und hierbei zum Verbiegen neigt. Dies gilt vor allem dann, wenn die Strebe als zwar großflächiges, aber relativ dünnwandiges Blech gestaltet ist, welches allenfalls durch zusätzliche Sicken gegenüber vertikalen Druckkräften versteift ist. Kommt es zu dem geschilderten Verformen der Strebe, beeinträchtigt dies die Abdichtung gegenüber dem Eintritt von Schmutz und Feuchtigkeit in das Innere des Laderaums.

Der Erfindung liegt daher die **Aufgabe** zugrunde, zu einer Lösung für die mit der Verformung der Strebe unter Last einhergehenden Nachteile zu kommen.

Vorgeschlagen wird hierzu eine Schließanordnung mit den eingangs angegebenen Merkmalen und gekennzeichnet durch einen aus mindestens einem Hubglied des Rungenhalters und mindestens einem damit zusammenwirkenden Hubglied an dem unteren Ende der Runge bestehenden Hubmechanismus zum Anheben der Runge und einer damit einhergehenden Entlastung der Strebe bei deren Einschwenken gegen den Rungenhalter.

Erfindungsgemäß kommt es also durch Zusammenwirken eines Hubgliedes des Rungenhalters und eines weiteren Hubgliedes an dem unteren Ende der Rurige zu einem Anheben der Runge bei deren Einschwenken gegen den Rungenhalters. Mit dem Anheben der Runge geht eine Entlastung der Strebe einher, so dass diese bei geschlossener Runge vollständig oder nahezu vollständig von vertikalen Drucktaste befreit ist. Dies wiederum hat zur Folge, dass es zu keiner nennenswerten Verformung der Strebe kommt. Wenn diese also zugleich die Funktion einer Abdichtung gegenüber der angrenzenden Bordwand des Fahrzeugaufbaus übernimmt, entstehen daher keine belastungsabhängigen Spalte oder Ritzen, durch die zusätzlich Staub oder Feuchtigkeit in den Laderaum des Fahrzeuges gelangen könnte.

Mit einer Ausgestaltung der Schließanordnung wird vorgeschlagen, dass mindestens eines der Hubglieder eine nach fahrzeuginnen hin ansteigende Rampe ist. Vorzugsweise ist die Rampe einstückig an dem Rungenhalter angeformt.

Gemäß einer weiteren Ausgestaltung ist vorgesehen, dass beide Hubglieder als, nach fahrzeuginnen hin ansteigende Rampen gestaltet sind.

Gemäß einer weiteren Ausführungsform ist das untere Ende der Strebe als Stützlager ausgebildet, welches lösbar gegen ein am Ladeboden oder am Rungenhalter ausgebildetes Gegenlager abgestützt ist.

Von besonderem Vorteil ist, wenn das Gegenlager als Mulde in dem Rungenhalter ausgebildet ist. Durch diese Gestaltung kann sich die Strebe mit ihrem unteren Ende aus dem Gegenlager lösen, so dass die Strebe nur noch mit ihrem oberen Ende an der Runge hängt, hingegen mit ihrem unteren Ende kontaktfrei zur Mulde ist, und damit jegliche vertikale Druckbelastung in der Strebe ausgeschlossen ist.

Gemäß einer weiteren Ausführungsform ist das obere, gelenkig an der Runge abgestützte Ende der Strebe mit der Runge verbunden. Wird also die Runge vom Rungenhalter entriegelt und nach außen weggeschwenkt, verbleibt die Strebe an der Runge und kann mit dieser z. B. in Längsrichtung bis in eine andere Position am Fahrzeugaufbau verschoben werden, um so Platz für Beladearbeiten zu schaffen.

Ausführungsbeispiele der Erfindung werden im Folgenden anhand der Zeichnungen erläutert. Darin zeigen:
- Figur 1: in perspektivischer Darstellung eine Schließanordnung für einen Fahrzeugaufbau, bestehend aus einer vom Fahrzeugaufbau lösbaren Runge und einer nach unten abklappbaren Bordwand;
- Figur 2: die Gegenstände der Figur 1 bei geringfügig aufgeklappter Bordwand;
- Figur 3: die Runge in gelöstem Zustand;
- Figur 4: die gesamte Runge in einer Seitenansicht;
- Figur 5: den vertikalen Teil der Runge in ausgeschwenkter Stellung;
- Figur 6: den unteren Teil der Runge in eingeschwenkter, verriegelter Stellung;
- Figur 7a: einen Vertikalschnitt durch das untere Ende der Runge und durch den Rungenhalter unmittelbar vor dem Schließen, und
- Figur 7b: einen Vertikalschnitt durch das untere Ende der Runge und durch den Rungenhalter nach dem Schließen.

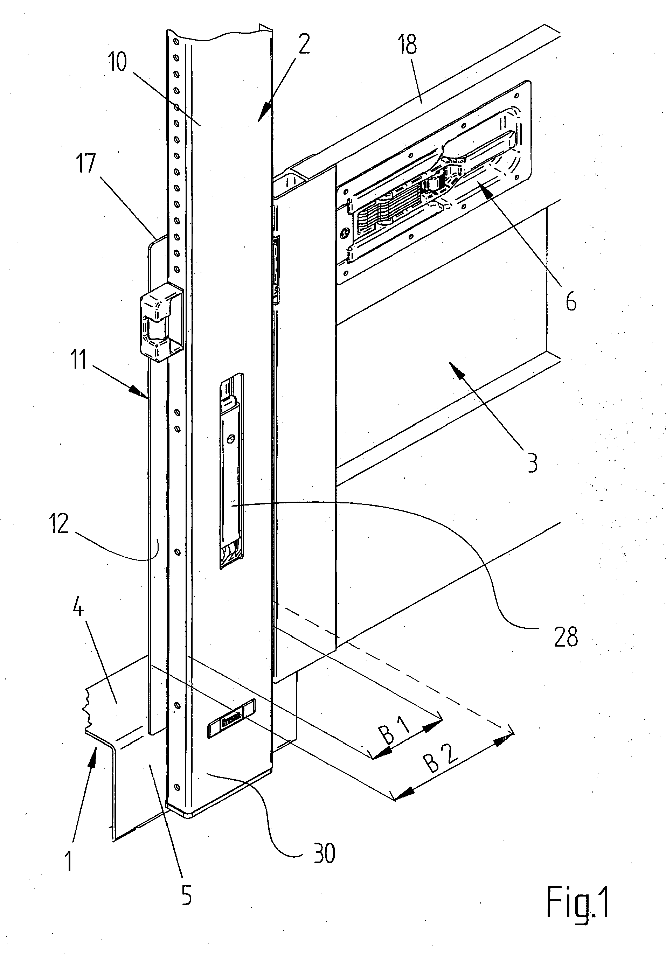

Figur 1 zeigt in perspektivischer Darstellung den Verbindungsbereich zwischen einem Ladeboden 1 eines Fahrzeugaufbaus und einer an dem Ladeboden 1 von außen her befestigbaren, vertikalen Runge 2. Zu jeder Seite der Runge 2 ist jeweils eine nach unten abklappbare Bordwand 3 angeordnet, wobei aus Gründen der Übersicht in Figur 1 nur die rechts von der Runge 2 angeordnete Bordwand 3 dargestellt ist.

Von dem flächigen Ladeboden 1 des Fahrzeugaufbaus ist in Figur 1 nur der Kantenbereich, d.h., der Übergang von der horizontalen Ladeebene 4 des Ladebodens 1 in die dazu rechtwinkelige Außenwand 5 dargestellt. An dieser Außenwand 5 ist ein Rungenhalter 24 starr befestigt, an dem sich das untere Ende 30 der Runge 2 verriegeln lässt.

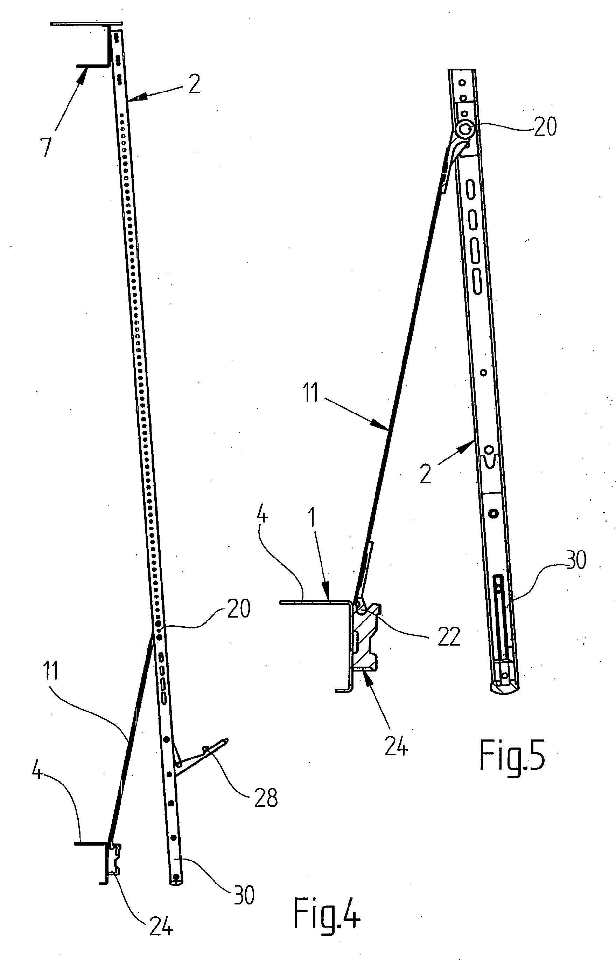

Die Runge 2 in ihrer Gesamtheit ist in Fig. 4 dargestellt. Sie ist Bestandteil einer Trägerkonstruktion für den Dachrahmen 7 des Fahrzeugaufbaus. Von diesem Dachrahmen 7 können z.B. Seitenplanen herunterhängen. Üblicherweise ist das obere Ende der Runge 2 mit Rollen versehen, und in einer Schienenanordnung an der oberen seitlichen Kante des Dachrahmens 7 seitwärts verschiebbar. Auf diese Weise lässt sich durch zunächst Ausschwenken und anschließendes seitliches Verschieben der mehrfach am Fahrzeug vorhandenen Rungen 2 eine zum Be- und Entladen vergrößerte Seitenöffnung schaffen.

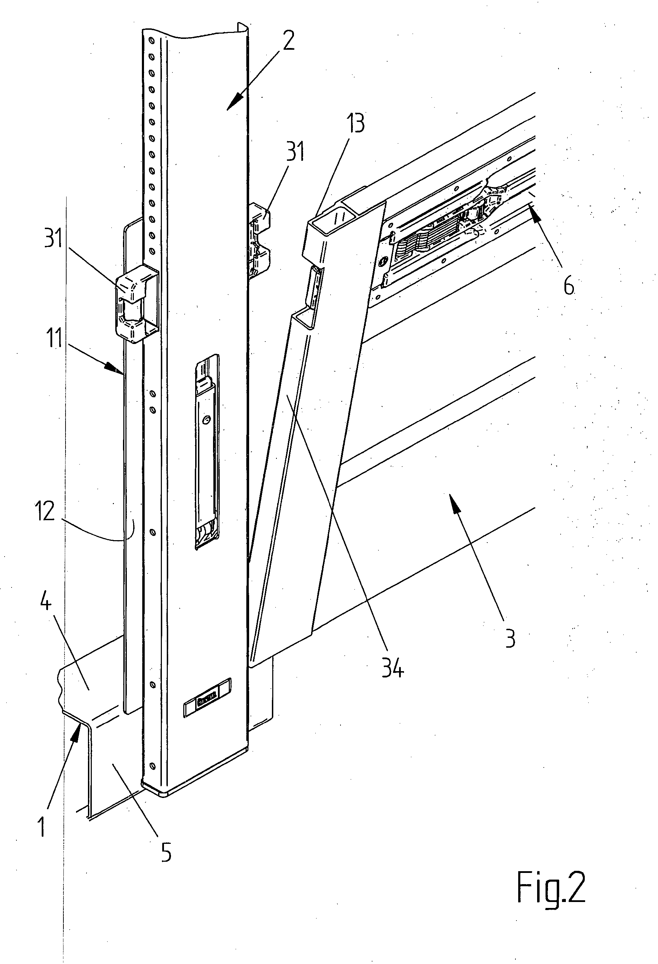

Dem Verschließen des Fahrzeugaufbaus dienen ferner die in den Fign. 1 und 2 wiedergegebenen Bordwände 3. Jede Bordwand 3 ist jeweils zwischen zwei der Rungen 2 angeordnet, und z. B. daran verriegelbar. Zu diesem Zweck ist die Bordwand 3 mit einem an sich bekannten Hebelverschluss 6 versehen. Jede Bordwand 3 ist an Scharnieren mit waagerechter Drehachse angelenkt, wobei die Scharniere, ebenso wie die Rungenhalter 24, an der Außenwand 5 des Ladebodens 1 befestigt sind. Auf diese Weise lässt sich jede Bordwand 3 um diese horizontale Achse nach unten herunterklappen, wodurch der Fahrzeugaufbau bis zur Höhe der Ladeebene 4 herunter zu öffnen ist.

Figur 2 zeigt die Bordwand 3 in leicht geöffneter Stellung. Der Hebelverschluss 6 der Bordwand ist geöffnet, so dass sich die Bordwand nunmehr vollständig abklappen lässt.

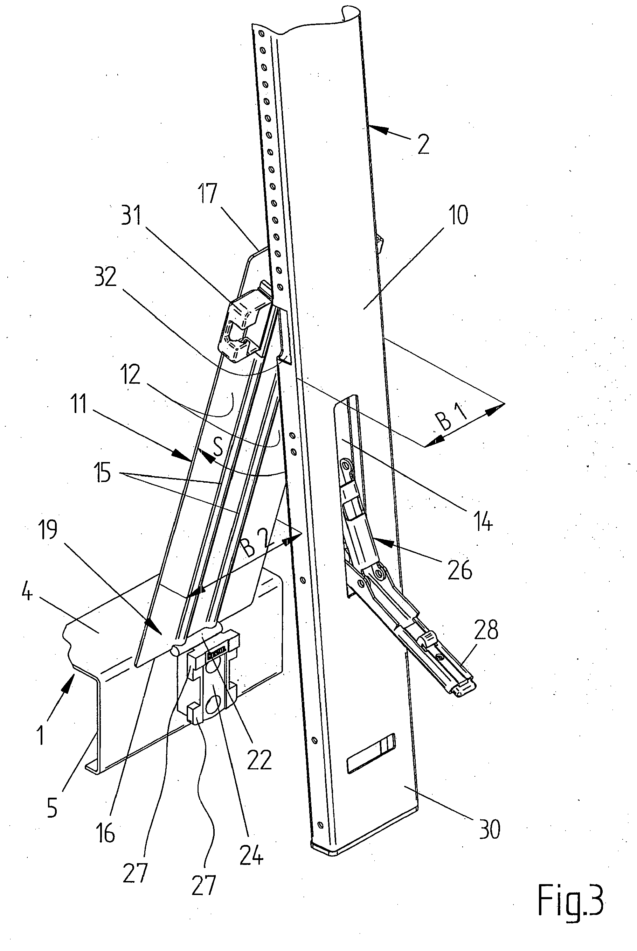

In Figur 3 ist die im Anschluss an das Abklappen der Bordwände mögliche Entriegelung der Runge dargestellt. Die Runge 2 besteht aus einem langgestreckten, geraden Rungenprofil 10. An dessen Rückseite befindet sich ein zusätzlicher Stützarm in Gestalt einer Strebe 11.

Die Breite des Profils 10 der Runge 2 beträgt B 1, und die Breite der Strebe 11 in Gestalt einer Platte beträgt B 2. Entscheidend ist, dass die Breite B 2 größer als die Breite B 1 ist, d.h. die Platte 11 steht seitlich deutlich über die Breite der Runge 2 über. Dies gilt bei der dargestellten Runge, welche zwischen zwei benachbarten Bordwänden angeordnet ist, für beide Seiten, d. h. die Strebe bzw. Platte 11 steht zu beiden Seiten hin über die im Vergleich geringere Breite B 1 der Runge 2 über. Auf diese Weise befindet sich an der jeweiligen Seite der Runge eine einstückig an der Strebe ausgebildete Abstützung 12 für den vertikalen Rand 13 der angrenzenden Bordwand 3. Figur 3 lässt wegen der ausgeschwenkten Stellung der Runge 2 jene vertikalen Randbereiche der Strebe 11 erkennen, an denen sich bei verriegelter Runge 2 und geschlossenen Bordwänden deren vertikale Ränder abstützen können.

Der entscheidende Vorteil der verbreiterten Strebe 11 ist die erzielte gemeinsame Abdeckung der Rückseite des Rungenprofils 10 einschließlich der angrenzenden vertikalen Randbereiche der jeweiligen Bordwand. Obwohl also die Runge konstruktionsbedingt mit Öffnungen, wie z.B. der Öffnung 14 (Figur 3), versehen ist, verhindert die hinter der Runge angeordnete, insgesamt geschlossene Strebe 11 ein Hindurchtreten von Schmutz, Staub oder Spritzwasser durch die Runge hindurch in den dahinter angeordneten Laderaum des Fahrzeugs. Die so erreichte Abdeckung zum Laderaum hin ist dadurch besonders effektiv, als die Breite B 2 der Strebe 11 bis über den vertikalen Rand der angrenzenden Bordwand 3 hinaus reicht, und auch noch die Bordwand 3 an deren Rückseite zum Teil abdeckt. Damit ist jeglichem Schmutz oder auch Spritzwasser ein direkter Weg durch die Runge hindurch in den Laderaum verwehrt. Die Gefahr von Schäden an den dort gelagerten Waren, etwa Feuchteschäden, wird reduziert.

Die Strebe 11 kann gemäß Fig. 3 zur Versteifung mit Sicken, anderen Profilierungen 15 oder zusätzlichen verstärkenden Leisten auf einer oder auf beiden Seiten versehen sein. Damit durch die Runge hindurchgelangtes und sich auf der Außenseite der Strebe 11 ansammelndes Wasser nicht auf die Ladeebene 4 herunterrinnt, ist der untere Rand 16 der Strebe 11 tiefer angeordnet, als die Ladeebene 4 des Ladebodens 1. An der Platte 11 herablaufendes Wasser gelangt daher sogleich auf die vertikale Außenwand 5 des Ladebodens 1. Von Vorteil ist ferner, dass sich die Strebe 11 mit ihrem oberen Ende bzw. Rand 17 in etwa bis auf Höhe des oberen Randes 18 (Figur 1) der Bordwand 3 erstreckt.

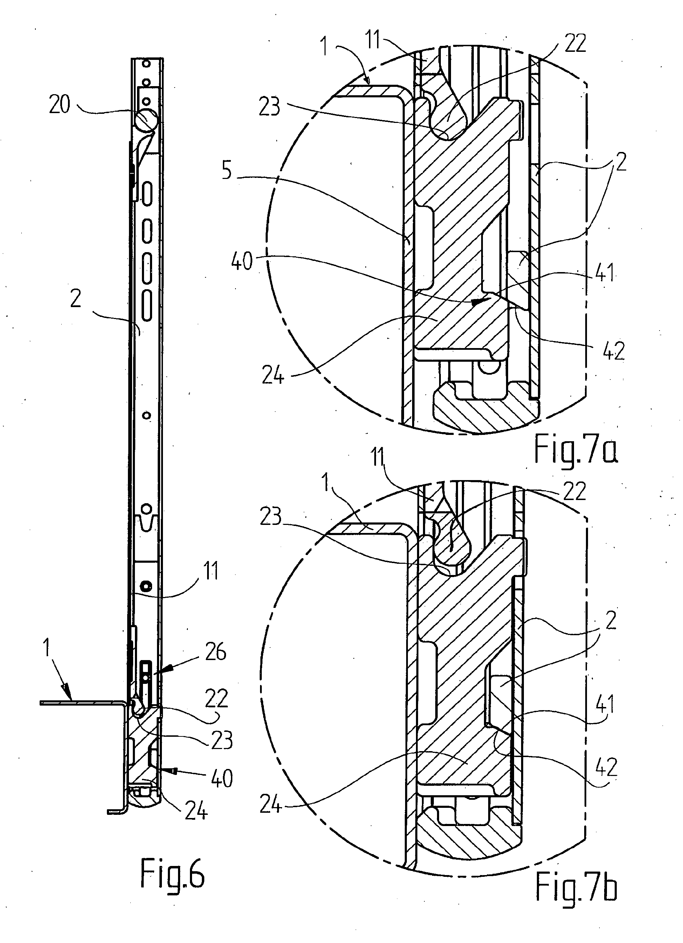

Gemäß den Figuren 4 bis 6 ist die Strebe 11, damit sie die Funktion eines Stützarms für die Runge 2 ausübt, unlösbar mit dem langgestreckten Rungenprofil 10 verbunden. Diese unlösbare, aber gelenkige Verbindung besteht in einem am oberen Ende 17 der Strebe 11 ausgebildeten Scharnier oder Gelenk 20 mit waagerechter Schwenkachse. Die Schwenkachse ist in Bezug auf die Tiefe der Runge 2 mittig angeordnet, wie Figur 5 erkennen lässt. Das Gelenk 20 ermöglicht eine Schwenkbarkeit der Strebe 11 in Bezug auf die Runge 2 gemäß dem in Figur 3 eingezeichneten Schwenkpfeil S.

Auch das untere Ende 19 der Strebe 11 ist Bestandteil eines Gelenks, jedoch handelt es sich insoweit um ein lösbares Gelenk. Zu diesem Zweck ist die Strebe 11 in Höhe ihres unteren Randes 16 mit einem Stützlager 22 in Gestalt eines teilzylindrischen Wulstes versehen. Ein korrespondierendes Gegenlager 23 ist einstückig an dem Rungenhalter 24 ausgebildet, der an der Außenwand 5 des Ladebodens 1 befestigt ist und außerdem mit einer Verriegelungsstruktur 27 für das untere Ende 30 der Runge 2 versehen ist. Das Gegenlager 23 ist als nach oben offene Mulde gestaltet, welche der korrespondierenden Schalenstruktur des Stützlagers 22 entspricht. Entscheidend ist, dass sich das wulstförmige Stützlager 22 um eine waagerechte Achse schwenkbar an dem Gegenlager 23 abstützt, ohne dass Stützlager 22 und Gegenlager 23 miteinander verbunden sind. Vielmehr lässt sich das an der Strebe 11 angeformte Stützlager 22 aus dem Gegenlager 23 herausnehmen, und darin wieder einsetzen.

Die Runge 2 und insbesondere deren Rungenprofil 10 reicht, ohne irgendwelche Gelenkoder Knickstellen, bis zur Höhe des Ladebodens 1 herab. Dort, an dem Rungenhalter 24, erfolgt die Verriegelung des unteren Endes 30 der Runge mittels eines in das Rungenprofil 10 eingesetzten Verriegelungsmechanismus 26. Dieser ist in der Weise gestaltet, dass bei anliegender Runge eine Blockierung hinter Verriegelungsstrukturen 27 erfolgt, die an dem Rungenhalter 24 angeformt sind. Zur Betätigung des Verriegelungsmechanismus 26 dient eine Hebelanordnung mit einem in der Runge 2 verschwenkbar gelagerten Schließhebel 28.

Figur 3 zeigt die entriegelte Runge 2. Deren unteres Ende 30 nimmt, seitlich abgestützt durch die auf dem Rungenlager 24 abgestützte Strebe 11, eine gegenüber dem Ladeboden 1 leicht ausgeschwenkte Position ein. Wird dann die Runge 2 nach innen, zum Fahrzeugaufbau hin gedrückt, erfolgt zugleich ein leichtes Anheben der gesamten Runge 2 infolge der Hebelwirkung der als Druckarm wirkenden Strebe 11. Das Heranschwenken der Runge 2 ist beendet, sobald deren unteres Ende 30 gegen den Ladeboden 1 stößt. Zugleich erstrecken sich Rungenprofil 10 und Strebe 11 dann parallel zueinander oder liegen aneinander an. In dieser Schließstellung lässt sich durch Betätigen des Schließhebels 28 die Runge an dem Rungenhalter 24 verriegeln, indem ein in der Runge längsbeweglicher Riegel hinter die Verriegelungsstruktur 27 gelangt und diese so hintergreift.

Zugleich arbeitet beim Andrücken der Runge 2 ein Hubmechanismus 40. Dieser besteht aus einem ersten Hubglied 41 und einem zweiten Hubglied 42. Das erste Hubglied 41 ist am Rungenhalter 24 angeformt, und beim Ausführungsbeispiel als nach fahrzeuginnen hin ansteigende Rampe gestaltet. Das damit zusammenwirkende zweite Hubglied 42 ist an dem unteren Ende 30 der Runge 2 angeordnet, und ist hier ebenfalls als nach fahrzeuginnen hin ansteigende Rampe gestaltet. Beim Herandrücken der Runge 2 an den Rungenhalter gleitet das eine Hubglied 42 an dem anderen Hubglied 41 entlang, wodurch die Runge 2 insgesamt etwas, nämlich ca. 2 bis 6 mm, angehoben wird, verbunden mit einer entsprechenden Entlastung der Strebe 11 von vertikalen Druckkräften. Diese Entlastung kann so deutlich sein, dass sich das untere Stützlager 22 der Strebe 11 geringfügig aus der Mulde des Gegenlagers 23 löst, jedoch ohne dass die Strebe 11 dann frei hin- und her schwingen kann.

Neben der beschriebenen Lösung mit zwei Rampen 41, 42 sind auch andere Ausführungen des Hubmechanismus 40 möglich, z.B. der Ersatz einer der beiden Rampen durch eine reibungsarmer arbeitende Walze, oder ein kleines Kippelement, welches im Zuge seiner Schwenk- bzw. Kippbewegung die Runge 2 einige Millimeter anhebt.

Nach der so erfolgten Befestigung und Verriegelung der Runge 2 wird die angrenzende Bordwand 3 nach oben geschwenkt, und ihr Hebelverschluss 6 wird an einem Schließteil 31 verriegelt. Bei der Ausführungsform nach den Figuren 1 bis 3 ist dieses Schließteil 31 an der fahrzeugaußen gelegenen Seite der Strebe 11 befestigt. Ein Teil des Körpers des Schließteils 31 gelangt hierbei in eine an der Rückseite des Rungenprofils 10 vorgesehene Ausnehmung 32.

Bei einer hier nicht dargestellten alternativen Ausführungsform befindet sich das Schließteil für den Bordwandverschluss an der Stirnseite der Bordwand 3. Der Hebelverschluss für die Bordwand ist in diesem Fall in das Profil der Runge 2 integriert. Das an der Bordwand angeordnete Schließteil ragt im geschlossenen Zustand in diese Ausnehmung der Runge 2 und wird mittels des Verriegelungsmechanismus 26 mit derselben verbunden.

### Bezugszeichenliste

- 1: Ladeboden
- 2: Runge
- 3: Bordwand
- 4: Ladeebene
- 5: Außenwand des Ladebodens
- 6: Hebelverschluss
- 7: Dachrahmen
- 10: Rungenprofil
- 11: Strebe
- 12: Abstützung
- 13: Rand
- 14: Öffnung
- 15: Profilierung
- 16: unterer Rand
- 17: oberes Ende
- 18: oberer Rand der Bordwand
- 19: unteres Ende
- 20: Gelenk
- 22: Stützlager
- 23: Gegenlager
- 24: Rungenhalter
- 26: Verriegelungsmechanismus
- 27: Verriegelungsstruktur
- 28: Schließhebel
- 30: unteres Ende der Runge
- 31: Schließteil
- 32: Ausnehmung
- 34: Stirnseite der Bordwand
- 40: Hubmechanismus
- 41: Hubglied
- 42: Hubglied
- B 1: Breite
- B 2: Breite
- S: Schwenkpfeil

## Patentansprüche

1. Schließanordnung für einen einen Ladeboden und einen durch vertikale Rungen (2) getragenen Dachrahmen aufweisenden Fahrzeugaufbau, wobei die Rungen (2), im Bereich des Dachrahmens gehalten, nach fahrzeugaußen ausschwenkbar gestaltet sind, und durch Einschwenken ihr unteres Ende (30) gegen einen in Höhe des Ladebodens angeordneten Rungenhalter (24) gelangt und an diesem verriegelbar ist, und wobei eine an der Rückseite der Runge (2) angeordnete Strebe (11) mit ihrem unteren Ende gelenkig an dem Ladeboden oder dem Rungenhalter (24), und mit ihrem oberen Ende gelenkig an der Runge (2) an einem Ort oberhalb deren unteren Endes (30) abgestützt ist,
**gekennzeichnet durch**
einen aus mindestens einem Hubglied (41) des Rungenhalters (24) und mindestens einem damit zusammenwirkenden Hubglied (42) an dem unteren Ende (30) der Runge (2) bestehenden Hubmechanismus (40) zum Anheben der Runge (2) und einer damit einhergehenden Entlastung der Strebe bei deren Einschwenken gegen den Rungenhalter (24).

2. Schließanordnung nach Anspruch 1, **dadurch gekennzeichnet, dass** mindestens eines der Hubglieder (41, 42) eine nach fahrzeuginnen hin ansteigende Rampe ist.

3. Schließanordnung nach Anspruch 2, **dadurch gekennzeichnet, dass** die Rampe einstückig an dem Rungenhalter (24) angeformt ist.

4. Schließanordnung nach einem der Ansprüche 1 bis 3, **dadurch gekennzeichnet, dass** beide Hubglieder (41, 42) als nach fahrzeuginnen hin ansteigende Rampen gestaltet sind.

5. Schließanordnung nach einem der vorangehenden Ansprüche, **dadurch gekennzeichnet, dass** das untere Ende der Strebe (11) als Stützlager (22) ausgebildet ist, welches lösbar gegen ein am Ladeboden oder am Rungenhalter ausgebildetes Gegenlager (23) abgestützt ist.

6. Schließanordnung nach Anspruch 5, **dadurch gekennzeichnet, dass** das Gegenlager (23) als nach oben offene Mulde in dem Rungenhalter (24) ausgebildet ist.

7. Schließanordnung nach einem der vorangehenden Ansprüche, **dadurch gekennzeichnet, dass** das obere, gelenkig an der Runge (2) abgestützte Ende der Strebe (11) mit der Runge (2) verbunden ist.

8. Schließanordnung nach einem der vorangehenden Ansprüche, **dadurch gekennzeichnet, dass** die Strebe (11) eine Breite (B2) aufweist, die die Breite (B1) der Runge (2) übersteigt, und dass der seitlich über die Breite (B1) der Runge (2) überstehende Bereich der Strebe (11) eine Abstützung (12) für den vertikalen Rand (13) einer angrenzenden Bordwand (3) bildet.

9. Schließanordnung Anspruch 8, **dadurch gekennzeichnet, dass** die Strebe (11) von der Höhe des Ladebodens (1) bis zur Höhe der Oberkante der Bordwand (3) die Breite (B2) aufweist.

## Claims

1. A closure device for a vehicle structure comprising a loading floor and a roof frame supported by vertical stanchions (2), wherein the stanchions (2), held in the region of the roof frame, are designed so as to be pivotable towards the outside of the vehicle, and, by pivoting inwards, the lower end (30) thereof reaches towards a stanchion holder (24) arranged at the level of the loading floor and is capable of being locked against the latter, and wherein a brace (11) arranged on the rear side of the stanchion (2) is supported at its lower end in an articulated manner on the loading floor or the stanchion holder (24) and at its upper end in an articulated manner on the stanchion (2) at a location above its lower end (30), **characterized by** a lifting mechanism (40) comprising at least one lifting member (41) of the stanchion holder (24) and at least one lifting member (42) co-operating therewith at the lower end (30) of the stanchion (2) for lifting the stanchion (2) and an associated relieving of the brace when the latter is pivoted in towards the stanchion holder (24).

2. A closure device according to Claim 1, **characterized in that** at least one of the lifting members (41, 42) is a ramp ascending towards the interior of the vehicle.

3. A closure device according to Claim 2, **characterized in that** the ramp is formed in one piece with the stanchion holder (24).

4. A closure device according to any one of Claims 1 to 3, **characterized in that** the two lifting members (41, 42) are designed in the form of ramps ascending towards the interior of the vehicle.

5. A closure device according to any one of the preceding Claims, **characterized in that** the lower end of the brace (11) is designed in the form of a support bearing (22) which is supported in a releasable manner against an abutment (23) formed on the loading floor or on the stanchion holder.

6. A closure device according to Claim 5, **characterized in that** the abutment (23) is designed in the form of a hollow open towards the top in the stanchion holder (24).

7. A closure device according to any one of the preceding Claims, **characterized in that** the upper end of the brace (11) supported in an articulated manner on the stanchion (2) is connected to the stanchion (2).

8. A closure device according to any one of the preceding Claims, **characterized in that** the brace (11) has a width (B2) which exceeds the width (B1) of the stanchion (2), and the region of the brace (11) projecting laterally beyond the width (B1) of the stanchion (2) forms a support (12) for the vertical edge (13) of an adjacent side wall (3).

9. A closure device according to Claim 8, **characterized in that** from the level of the loading floor (1) to the level of the upper edge of the side wall (3) the brace (11) has the width (B2).

## Revendications

1. Mécanisme de fermeture pour une structure de véhicule présentant un fond de chargement et un châssis de toit porté par des ranches verticales (2), les ranches (2), fixées dans la région du châssis de toit, étant configurées de manière à pouvoir pivoter vers l'extérieur du véhicule, et par pivotement vers l'intérieur, leur extrémité inférieure (30) parvenant contre un support de ranche (24) disposé à la hauteur du fond de chargement et pouvant être verrouillée à celui-ci, et un montant (11) disposé au niveau du côté arrière de la ranche (2) étant supporté avec son extrémité inférieure de manière articulée au fond de chargement ou au support de ranche (24) et avec son extrémité supérieure de manière articulée à la ranche (2) en un emplacement au-dessus de son extrémité inférieure (30),
**caractérisé par**
un mécanisme de levage (40) pour soulever la ranche (2) constitué d'au moins un organe de levage (41) du support de ranche (24) et d'au moins un organe de levage (42) coopérant avec celui-ci à l'extrémité inférieure (30) de la ranche (2) et pour ainsi décharger de manière correspondante la contrainte appliquée au montant lors de son pivotement vers l'intérieur vers le support de ranche (24).

2. Mécanisme de fermeture selon la revendication 1, **caractérisé en ce qu'**au moins l'un des organes de levage (41, 42) est une rampe montant vers l'intérieur du véhicule.

3. Mécanisme de fermeture selon la revendication 2, **caractérisé en ce que** la rampe est formée d'une seule pièce sur le support de ranche (24).

4. Mécanisme de fermeture selon l'une quelconque des revendications 1 à 3, **caractérisé en ce que** les deux organes de levage (41, 42) sont configurés sous forme de rampes montant vers l'intérieur du véhicule.

5. Mécanisme de fermeture selon l'une quelconque des revendications précédentes, **caractérisé en ce que** l'extrémité inférieure du montant (11) est réalisée sous forme de palier de support (22) qui est supporté de manière détachable contre un palier conjugué (23) réalisé au niveau du fond de chargement ou au niveau du support de ranche.

6. Mécanisme de fermeture selon la revendication 5, **caractérisé en ce que** le palier conjugué (23) est réalisé sous forme de creux ouvert vers le haut dans le support de ranche (24).

7. Mécanisme de fermeture selon l'une quelconque des revendications précédentes, **caractérisé en ce que** l'extrémité supérieure du montant (11), supportée de manière articulée à la ranche (2), est connectée à la ranche (2).

8. Mécanisme de fermeture selon l'une quelconque des revendications précédentes, **caractérisé en ce que** le montant (11) présente une largeur (B2) qui est supérieure à la largeur (B1) de la ranche (2), et **en ce que** la région du montant (11) dépassant latéralement au-delà de la largeur (B1) de la ranche (2) forme un appui (12) pour le bord vertical (13) d'une paroi de bord adjacente (3).

9. Mécanisme de fermeture selon la revendication 8, **caractérisé en ce que** le montant (11), depuis la hauteur du fond de chargement (1) jusqu'à la hauteur de l'arête supérieure de la paroi de bord (3), présente la largeur (B2).
